# EUROPEAN PATENT APPLICATION

(11) **EP 4 475 200 A2**
(43) Date of publication of application: **11.12.2024**
(21) Application number: 24177122.9
(22) Date of filing: 21.05.2024
(51) Int. Cl.: H01M 4/00, H01M 4/13, H01M 50/107

(54) **ELECTRODE BODY AND ELECTRIC STORAGE DEVICE**

(30) Priority: 06.06.2023 JP 2023092803
(71) Applicant: Prime Planet Energy & Solutions, Inc., Chuo-ku Tokyo 103-0022 (JP)
(72) Inventor: UCHIDA, Yozo, Tokyo, 103-0022 (JP)
(74) Representative: Kuhnen & Wacker Patent- und Rechtsanwaltsbüro PartG mbB

(57) **Abstract**

A herein disclosed electrode body is a wound body in which, via a first separator 30A and a second separator 30B, a positive electrode plate 10 and a negative electrode plate 20 are wound therein. The first separator 30A is adhered to the positive electrode plate 10, but not adhered to the negative electrode plate 20. On the other hand, the second separator 30B is adhered to the negative electrode plate 20, but not adhered to the positive electrode plate 10. Then, both of a second terminal end part 30Be of the second separator 30B and a first terminal end part 30Ae of the first separator 30A are exposed to an outer surface of the wound body. In addition, a separator wound part 40s in which the first separator 30A and the second separator 30B are wound therein includes a non-adhesion area 30X where the separators are not adhered to each other. Then, on the outermost surface of the wound body, a first adhesive tape 80 is attached, and a first peeling part 82 is formed at one of end parts of the first adhesive tape 80. In accordance with such a configuration, it is possible to easily disassemble the electrode body so as to separate a pair of electrode plates.

## Description

### BACKGROUND

### 1. Technical Field

A technique disclosed herein relates to an electrode body and an electric storage device.

### 2. Description of the Related Art

An electric storage device, such as lithium ion secondary battery, includes, for example, an electrode body including a pair of electrode plates (a positive electrode plate and a negative electrode plate) and includes a battery case configured to accommodate the electrode body. As an example of the electrode body of this electric storage device, it is possible to use a wound electrode body in which the positive electrode plate and the negative electrode plate are wound via 2 separators. In JP2015-210980 and JP2013-243070, this kind of wound electrode body is disclosed.

### SUMMARY

Anyway, according to a recent growing awareness onto an environment problem, a reproducing technique is attracting attention that collects valuable metals from a used electric storage device so as to reuse the collected metals. In this reproducing technique, at first, the electrode body is taken out from the used electric storage device. Next, this electrode body is immersed into an acid liquid, or the like, so as to obtain a metal solution. Then, onto this metal solution, various separation processings (neutralization precipitation, solvent extraction, or the like) are performed. By doing this, it is possible to collect desired valuable metals from the electrode body.

However, on the above described reproducing technique, both of a metal component derived from the positive electrode plate and a metal component derived from the negative electrode plate are contained in the metal solution. In that case, a type or number of separation processings required for collecting the valuable metals from the metal solution is increased. As the result, it might cause reducing collection rates of the valuable metals, increasing a reproduction cost, or the like. Therefore, in a field of the reproducing technique of the electric storage device, it is required to implement a technique for properly disassembling the electrode body and thus for separating the pair of electrode plates.

### DETAILED DESCRIPTION

The herein disclosed electrode body includes a first electrode plate formed in a strip-like shape, a first separator formed in a strip-like shape, a second electrode plate formed in a strip-like shape, and a second separator formed in a strip-like shape. Then, this electrode body is a wound body in which, via the first separator and the second separator, the first electrode plate and the second electrode plate are wound therein. The first separator is adhered to the first electrode plate but not adhered to the second electrode plate, and the second separator is adhered to the second electrode plate but not adhered to the first electrode plate. In addition, regarding this electrode body, a separator wound part in which only the first separator and the second separator are wound therein is formed at an outer peripheral part of the wound body, and the first separator is wound therein at the outermost periphery of the separator wound part. A second terminal end part being a winding-end end part of the second separator extends from a first terminal end part being a winding-end end part of the first separator so as to be exposed to an outer surface of the wound body. The separator wound part comprises a non-adhesion area where the first separator and the second separator are not adhered, the non-adhesion area is arranged on at least one of a first opposed part and a second opposed part. The first opposed part located between an inner side surface of the first separator and an outer side surface of the second separator. The second opposed part located between an outer side surface of the first separator and an inner side surface of the second separator. Then, the non-adhesion area extends from the first terminal end part and/or the second terminal end part toward an inner side of a wound direction. In addition, regarding the herein disclosed electrode body, a first adhesive tape straddling both of the first terminal end part and the second terminal end part is attached to the outermost surface of the wound body, and a first peeling part not sticking to the outermost surface of the wound body is formed on at least one of both end parts of the first adhesive tape in a circumferential direction.

Regarding the herein disclosed electrode body, the first separator and the first electrode plate are adhered to each other, and the second separator and the second electrode plate are adhered to each other. Then, a portion between the first separator and the second electrode plate and a portion between the second separator and the first electrode plate are not adhered. Regarding the electrode body having the above described configuration, by unwinding the winding of 2 separators, it is possible to easily separate the first electrode plate adhered to the first separator and the second electrode plate adhered to the second separator.

Further, the herein disclosed electrode body includes a structure for making the winding of 2 separators be easily unwound. In particular, on an outer peripheral part of a normal wound electrode body, a separator wound part is formed in which only 2 separators wound therein without going through the electrode plate. If the separators are adhered to each other on a whole area of this separator wound part, it becomes very difficult to unwind the winding of the separator. Thus, regarding the herein disclosed electrode body, the second terminal end part of the second separator extends from a first terminal end part of the first separator being wound therein at the outermost periphery of the separator wound part. Then, the separator wound part includes a non-adhesion area extending from the first terminal end part and/or the second terminal end part to an inner side of the wound direction. By doing this, holding and pulling the first terminal end part and/or the second terminal end part can easily unwind the winding of the separator.

Furthermore, regarding the herein disclosed electrode body, the first peeling part not sticking to the outermost surface of the wound body is formed on at least one end part of the first adhesive tape for fixing the first terminal end part and the second terminal end part. By doing this, when the first adhesive tape is peeled off, it is possible to inhibit the first terminal end part or the second terminal end part from being broken. As this result, when the winding of the separator is unwound, it is possible to properly hold the first terminal end part and/or the second terminal end part.

As described above, according to the herein disclosed electrode body, it is possible to easily unwind the winding of the separator at an outer peripheral part (the separator wound part) of the wound electrode body. Then, by unwinding the winding of this separator, it is possible to easily separate the electrode body into the first electrode plate adhered to the first separator and the second electrode plate adhered to the second separator. As this result, it is possible to provide the pair of electrode plates individually to the reproduction processing, and therefore it is possible to contribute in an efficiency of a collection rate of the valuable metal, reduction of the reproduction cost, or the like.

### BRIEF DESCRIPTIONOF THE DRAWINGS

FIG. 1 is a perspective view that schematically shows an electric storage device.
FIG. 2 is a longitudinal cross section view that is schematically shown along a II-II line in FIG. 1.
FIG. 3 is a longitudinal cross section view that is schematically shown along a III-III line in FIG. 1.
FIG. 4 is a lateral cross section view that is schematically shown along a IV-IV line in FIG. 1.
FIG. 5 is a perspective view that schematically shows an electrode body attached to a sealing plate.
FIG. 6 is a perspective view that schematically shows the electrode body to which a positive electrode second current collector and a negative electrode second current collector are attached.
FIG. 7 is a schematic view that shows a configuration of the electrode body in accordance with a first embodiment.
FIG. 8 is a front view that schematically shows the electrode body in accordance with the first embodiment.
FIG. 9 is a longitudinal cross section view that is schematically shown along a IX-IX line in FIG. 8.
FIG. 10 is an enlarged cross section view in which a vicinity of an adhesive tape of the electrode body shown in FIG. 9 is enlarged.
FIG. 11 is a cross section view of the electrode body shown in FIG. 9 being decomposed.
FIG. 12 is an enlarged cross section view in which the vicinity of the adhesive tape of the electrode body in accordance with another embodiment is enlarged.
FIG. 13 is a cross section view of the electrode body shown in FIG. 12 being decomposed.
FIG. 14 is a front view that schematically shows the electrode body in accordance with another embodiment.
FIG. 15 is a front view that schematically shows the electrode body in accordance with another embodiment.
FIG. 16 is a front view that schematically shows the electrode body in accordance with another embodiment.
FIG. 17 is a front view that schematically shows the electrode body in accordance with another embodiment.

### DETAILED DESCRIPTION

Below, an embodiment of a herein disclosed technique will be explained while referring to figures. Incidentally, the matters other than matters particularly mentioned in this specification and required for practicing the present disclosure (for example, a general configuration of a battery and a manufacturing process) can be grasped as design matters of those skilled in the art based on the related art in the present field. The herein disclosed technique can be executed based on the contents disclosed in the present specification, and the technical common sense in the present field. Incidentally, a wording "A to B" representing a range in the present specification semantically covers not only a meaning of "equal to or more than A and not more than B", but also meanings of "preferably more than A" and "preferably less than B".

Incidentally, a term "electric storage device" in the present specification represents a concept semantically covering an apparatus that generates an electric charge and discharge response by making charge carriers move between a pair of electrodes (a positive electrode and a negative electrode) via an electrolytic solution. In other words, the electric storage device in accordance with the herein disclosed technique semantically covers a secondary battery, such as lithium ion secondary battery, nickel hydrogen battery, and nickel cadmium battery, a capacitor, such as lithium ion capacitor, and electric double layer capacitor, or the like.

Additionally, on each of figures referred in the present specification, a reference sign X represents the "depth direction", a reference sign Y represents the "width direction", and a reference sign Z represents the "height direction". Additionally, in the depth direction X, F represents the "front" and Rr represents the "rear". In the width direction Y, L represents the "left" and R represents the "right". Then, in the height direction Z, U represents the "up", and D represents the "down". However, these directions are for convenience sake of explanation, and are not intended to restrict a disposed form with which the herein disclosed electric storage device is used.

### <First embodiment>

### 1. Structure of electric storage device

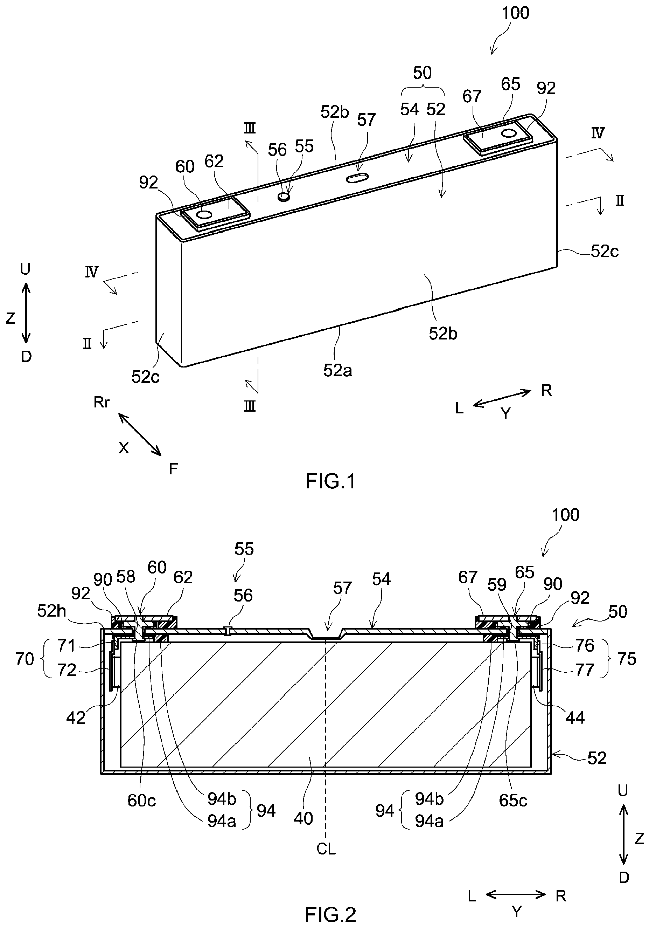

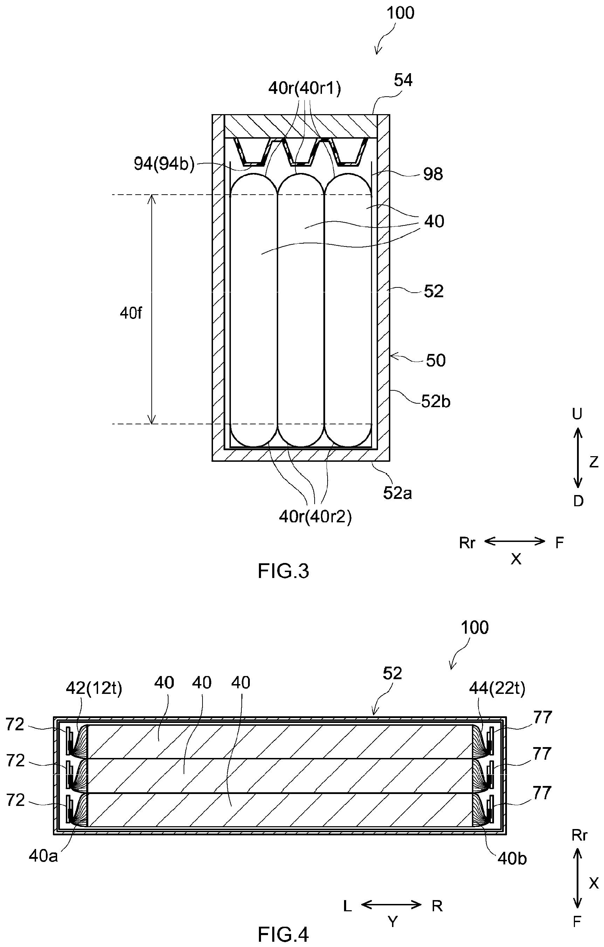

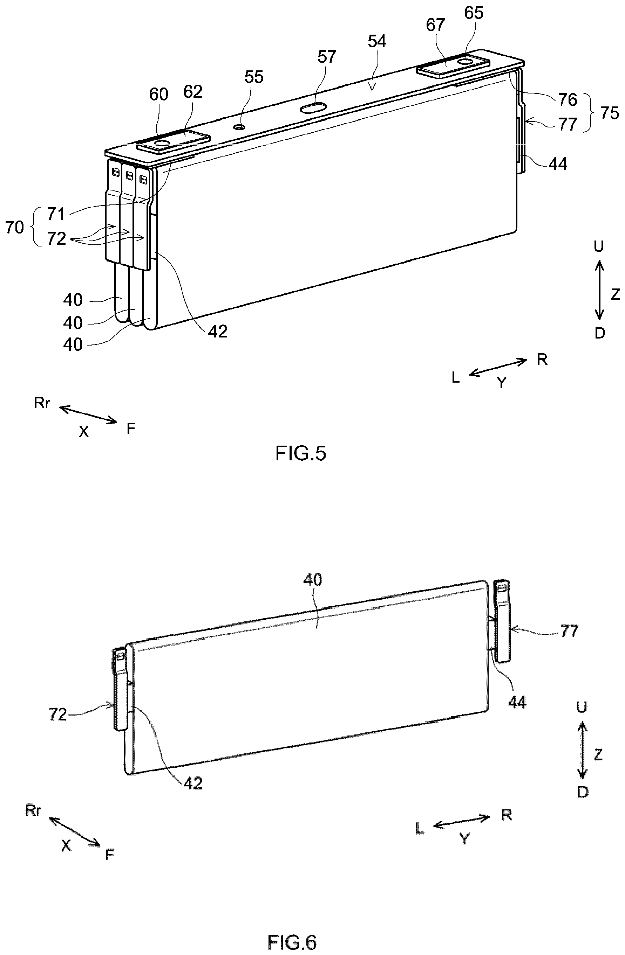

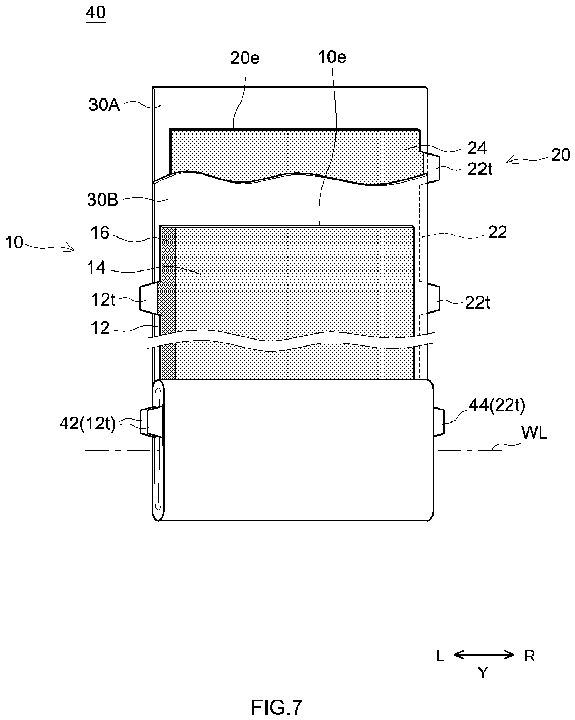

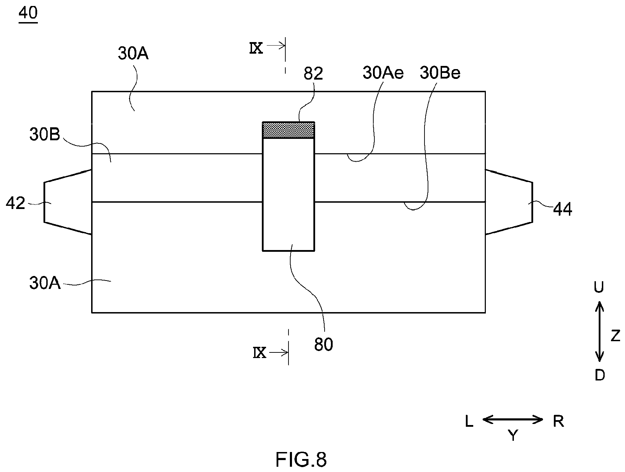

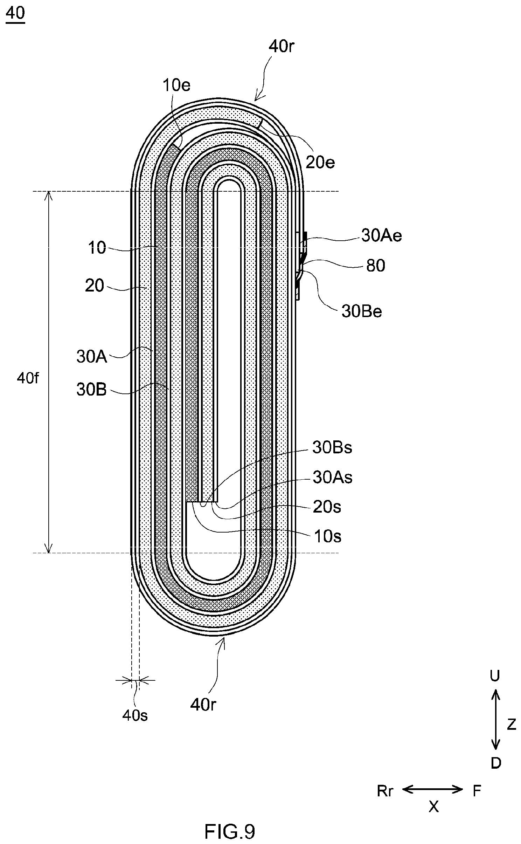

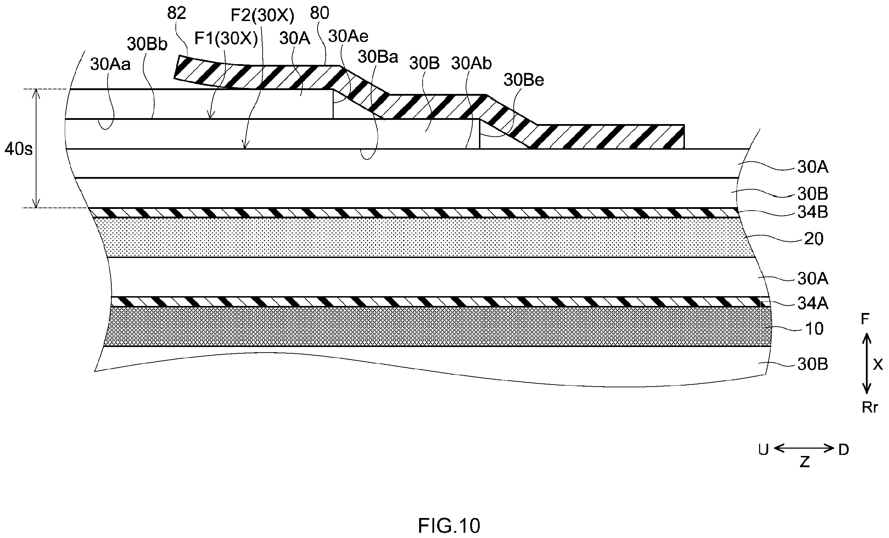

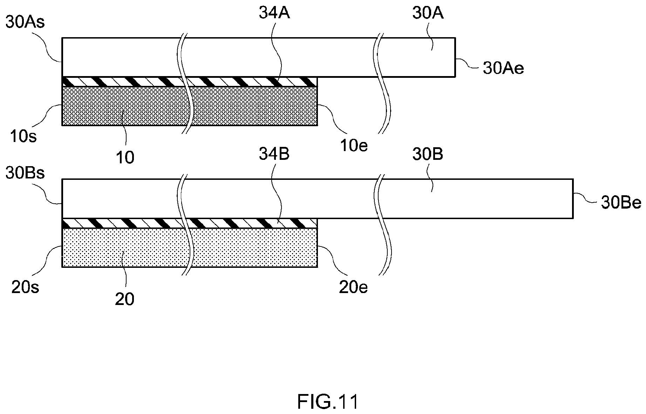

Below, after a structure of the electric storage device is explained, an electrode body used on this electric storage device will be described. FIG. 1 is a perspective view that schematically shows the electric storage device. FIG. 2 is a longitudinal cross section view that is schematically shown along a II-II line in FIG. 1. FIG. 3 is a longitudinal cross section view that is schematically shown along a III-III line in FIG. 1. FIG. 4 is a lateral cross section view that is schematically shown along a IV-IV line in FIG. 1. FIG. 5 is a perspective view that schematically shows the electrode body attached to a sealing plate. FIG. 6 is a perspective view that schematically shows the electrode body to which a positive electrode second current collector and a negative electrode second current collector are attached. FIG. 7 is a schematic view that shows a configuration of the electrode body in accordance with a first embodiment. FIG. 8 is a front view that schematically shows the electrode body in accordance with the first embodiment. FIG. 9 is a longitudinal cross section view that is schematically shown along a IX-IX line in FIG. 8. FIG. 10 is an enlarged cross section view in which a vicinity of an adhesive tape of the electrode body shown in FIG. 9 is enlarged. FIG. 11 is a cross section view of the electrode body shown in FIG. 9 being decomposed.

As shown in FIG. 2, the electric storage device 100 includes the electrode body 40 and a battery case 50 that is configured to accommodate the electrode body 40. Below, a particular configuration of the electric storage device 100 will be described.

### (1) Battery case

The battery case 50 is a housing configured to accommodate the electrode body 40. As the illustration is omitted, in an inside of the battery case 50, a nonaqueous electrolytic solution is also accommodated. The battery case 50 shown in FIG. 1 has an outer shape being a flat and bottomed rectangular parallelepiped shape (a square shape). Incidentally, for the battery case 50, a conventionally known material can be used without particular restriction. For example, it is good that the battery case 50 is made of a metal. As an example of a material of the battery case 50, it is possible to use aluminum, aluminum alloy, iron, iron alloy, or the like.

As shown in FIG. 1 and FIG. 2, the battery case 50 includes an outer case 52 and a sealing plate 54. The outer case 52 is a container that is formed in a flat bottomed square shape having an opening 52h at an upper surface. The outer case 52 includes a bottom wall 52a formed in a flat surface approximately rectangular shape, a pair of longer side walls 52b extending from long sides of the bottom wall 52a to an upward U in the height direction Z, and a pair of short side walls 52c extending from short sides of the bottom wall 52a to the upward U in the height direction Z. On the other hand, the sealing plate 54 is a plate-shaped member formed in a flat surface approximately rectangular shape for covering the opening 52h of the outer case 52. Then, an outer peripheral edge part of the sealing plate 54 is joined (for example, welded) to an outer peripheral edge part of the opening 52h of the outer case 52. By doing this, the battery case 50 is manufactured whose inside is hermetically sealed in an airtight manner. In addition, the sealing plate 54 is provided with a liquid injection hole 55 and a gas exhaust valve 57. The liquid injection hole 55 is a penetration hole that is provided for injecting an electrolytic solution to the inside of the battery case 50 having been hermetically sealed. Incidentally, the liquid injection hole 55 is sealed by a sealing member 56 after the liquid injection of the electrolytic solution is performed. In addition, the gas exhaust valve 57 is a thin-walled part that is designed to be broken (opened), when a large amount of gas is generated inside the battery case 50, so as to exhaust the gas.

### (2) Electrolytic solution

As described above, at the inside of the battery case 50, not only the electrode body 40 but also the electrolytic solution (omitted in figures) is accommodated. A large portion of the electrolytic solution is osmosed to the inside of the electrode body 40. As the electrolytic solution, it is possible to use one used in a conventionally known electric storage device without particular restriction. For example, as the electrolytic solution, it is possible to use a nonaqueous electrolytic solution in which a supporting salt is dissolved into a nonaqueous type solvent. As an example of this nonaqueous type solvent, it is possible to use a carbonate type solvent, such as ethylene carbonate, dimethyl carbonate, and ethyl methyl carbonate. As an example of the supporting salt, it is possible to use a fluorine-containing lithium salt, such as LiPF₆.

### (3) Electrode terminal

In addition, at one of end parts in the width direction Y of the sealing plate 54 (left side in FIG. 1 and FIG. 2), a positive electrode terminal 60 is attached. The positive electrode terminal 60 described above is connected at an outer side of the battery case 50 to a positive electrode outside conductive member 62 formed in a plate shape. On the other hand, at the other one of the end parts in the width direction Y of the sealing plate 54 (right side in FIG. 1 and FIG. 2), a negative electrode terminal 65 is attached. To the negative electrode terminal 65 described above, a negative electrode outside conductive member 67 formed in a plate shape is attached. These outside conductive members (the positive electrode outside conductive member 62 and the negative electrode outside conductive member 67) would be connected via an outside connecting member (a bus bar, or the like) to another electric storage device or an external equipment. Incidentally, it is preferable that the outside conductive member is configured with a metal outstanding to an electrically conductive property (aluminum, aluminum alloy, copper, copper alloy, or the like).

### (4) Electrode current collector

As shown in FIG. 3 to FIG. 5, regarding this electric storage device 100, plural (3) electrode bodies 40 are accommodated inside the battery case 50. Although the detailed structure is described later, each of the electrode bodies 40 is provided with a positive electrode tab group 42 and a negative electrode tab group 44 (see FIG. 7 and FIG. 8). As shown in FIG. 4, these electrode tab groups (the positive electrode tab group 42 and the negative electrode tab group 44) are folded and bent in states of being joined with the electrode current collectors (the positive electrode current collector 70 and the negative electrode current collector 75).

In particular, each positive electrode tab group 42 of plural electrode bodies 40 is connected to the positive electrode terminal 60 via the positive electrode current collector 70. This positive electrode current collector 70 is accommodated at the inside of the battery case 50. This positive electrode current collector 70 is, as shown in FIG. 2 and FIG. 5, includes a positive electrode first current collector 71 that is a conductive member extending in the width direction Y along an inner side surface of the sealing plate 54 and being formed in a plate shape, and includes plural positive electrode second current collectors 72 each of which is a conductive member extending along the height direction Z and being formed in a plate shape. Then, a lower end part 60c of the positive electrode terminal 60 is inserted into the inside of the battery case 50 through a terminal insert hole 58 of the sealing plate 54, and is connected to the positive electrode first current collector 71 (see FIG. 2). On the other hand, as shown in FIG. 4 to FIG. 6, this electric storage device 100 is provided with a number of positive electrode second current collectors 72, the number corresponding to the plural electrode bodies 40. Each of the positive electrode second current collectors 72 is connected to the positive electrode tab group 42 of the electrode body 40. Then, as shown in FIG. 4 and FIG. 5, the positive electrode tab group 42 of the electrode body 40 is folded and bent to make the positive electrode second current collector 72 and one side surface 40a of the electrode body 40 be opposed to each other. By doing this, a top end part of the positive electrode second current collector 72 and the positive electrode first current collector 71 are electrically connected.

On the other hand, each negative electrode tab group 44 of the plural electrode bodies 40 is connected to the negative electrode terminal 65 via the negative electrode current collector 75. A connection structure at the negative electrode side described above is approximately the same as a connection structure at the positive electrode side described above. In particular, the negative electrode current collector 75 includes a negative electrode first current collector 76 that is a conductive member extending in the width direction Y along the inner side surface of the sealing plate 54 and being formed in a plate shape, and includes plural negative electrode second current collectors 77 each of which is a conductive member extending along the height direction Z and being formed in a plate shape (see FIG. 2 and FIG. 5). Then, a lower end part 65c of the negative electrode terminal 65 is inserted into the inside of the battery case 50 through a terminal insert hole 59, and is connected to the negative electrode first current collector 76 (see FIG. 2). On the other hand, each of the plural negative electrode second current collectors 77 is connected to the negative electrode tab group 44 of the electrode body 40 (see FIG. 4 to FIG. 6). Then, the negative electrode tab group 44 is folded and bent to make the negative electrode second current collector 77 and the other one side surface 40b of the electrode body 40 be opposed to each other. By doing this, a top end part of the negative electrode second current collector 77 and the negative electrode first current collector 76 are electrically connected. In addition, even on the electrode current collectors (the positive electrode current collector 70 and the negative electrode current collector 75), the metal outstanding to the electrically conductive property (aluminum, aluminum alloy, copper, copper alloy, or the like) can be suitably used.

### (5) Insulating member

In addition, onto this electric storage device 100, various insulating members are attached in order to inhibit conduction between the electrode body 40 and the battery case 50. In particular, between the positive electrode outside conductive member 62 (the negative electrode outside conductive member 67) and an outer side surface of the sealing plate 54, an outside insulating member 92 is disposed (see FIG. 1). By doing this, it is possible to inhibit the positive electrode outside conductive member 62 and the negative electrode outside conductive member 67 from conducting with the sealing plate 54. Additionally, to each of the terminal insert holes 58, 59 of the sealing plate 54, a gasket 90 is attached (see FIG. 2). By doing this, it is possible to inhibit the positive electrode terminal 60 (or the negative electrode terminal 65) inserted into the terminal insert hole 58, 59 from conducting with the sealing plate 54. In addition, between the positive electrode first current collector 71 (or the negative electrode first current collector 76) and an inner side surface of the sealing plate 54, an inside insulating member 94 is arranged. This inside insulating member 94 includes a base part 94a formed in a plate shape and disposed between the positive electrode first current collector 71 (or the negative electrode first current collector 76) and the inner side surface of the sealing plate 54. By doing this, it is possible to inhibit the positive electrode first current collector 71 or the negative electrode first current collector 76 from conducting with the sealing plate 54. Furthermore, the inside insulating member 94 includes a protruding part 94b that protrudes from the inner side surface of the sealing plate 54 toward the electrode body 40 (see FIG. 2 and FIG. 3). By doing this, it is possible to regulate movement of the electrode body 40 in the height direction Z, and to inhibit the electrode body 40 and the sealing plate 54 from directly coming into contact with each other. In addition, plural electrode bodies 40 are accommodated at the inside of the battery case 50 in a state of being covered by an electrode body holder 98 (see FIG. 3) consisted of a resin sheet having an insulating property. By doing this, it is possible to inhibit the electrode body 40 and the outer case 52 from directly coming into contact with each other. Incidentally, a material of each insulating member described above is not particularly restricted, if having a predetermined insulating property. As an example, it is possible to use a synthetic resin material, such as polyolefin type resin (example: polypropylene (PP), polyethylene (PE)), fluorine type resin (example: perfluoro alkoxy alkane (PFA), polytetrafluoroethylene (PTFE)), or the like.

### (6) Electrode body

Next, the electrode body 40 in accordance with the present embodiment will be described. As shown in FIG. 7, the electrode body 40 in accordance with the present embodiment includes a first separator 30A formed in a strip-like shape, a first electrode plate (the positive electrode plate 10) formed in a strip-like shape, a second separator 30B formed in a strip-like shape, and a second electrode plate (the negative electrode plate 20) formed in a strip-like shape. Below, 4 strip-like shape members configuring the electrode body 40 are referred to as "sheet member", too. Then, the electrode body 40 in accordance with the present embodiment is a wound body (a wound electrode body) in which the positive electrode plate 10 and the negative electrode plate 20 are wound therein via the first separator 30A and the second separator 30B. Then, as shown in FIG. 7 to FIG. 9, the electrode body 40 in accordance with the present embodiment is crushed to be formed in a flat shape as a whole.

In addition, the flat shaped electrode body 40 includes, as shown in FIG. 9, a pair of bent parts 40r whose outer surfaces are bent, and includes a flat part 40f whose outer surface configured to couple the pair of bent parts 40r is flat. Incidentally, regarding this electric storage device 100, the electrode body 40 is accommodated at the inside of the battery case 50 to make a winding axis WL of the electrode body 40 and the width direction Y of the electric storage device 100 approximately coincide with each other (see FIG. 2). In other words, a term "winding axis direction" in a following explanation represents a direction approximately the same as the width direction Y in figures. In addition, a term "wound direction" in a following explanation represents a direction along the winding of the sheet member formed in a strip-like shape (the first separator 30A, the positive electrode plate 10, the second separator 30B, or the negative electrode plate 20) from a terminal end part toward a starting end part of this sheet member. Incidentally, as shown in FIG. 3, regarding the present embodiment, 3 electrode bodies 40 are accommodated at the inside of the battery case 50. However, a number of the electrode bodies accommodated in one battery case, which is not particularly restricted, might be equal to or more than 2 (plural), or might be 1.

### (a) Positive electrode plate

As shown in FIG. 7, the positive electrode plate 10 (the first electrode plate) is a member formed in a long strip-like shape. The positive electrode plate 10 includes a positive electrode substrate 12 being a metal foil formed in a strip-like shape, and includes a positive electrode active material layer 14 imparted on at least one of surfaces of the positive electrode substrate 12. Incidentally, from a perspective of a battery performance, it is preferable that the positive electrode active material layer 14 is imparted on both surfaces of the positive electrode substrate 12. In addition, on this positive electrode plate 10, a positive electrode tab 12t protrudes from one of edge sides in the winding axis direction (the width direction Y) toward an outer side (a left side in FIG. 7). Then, regarding this positive electrode tab 12t, plural ones are formed at positions with a predetermined interval in a longitudinal direction L of the positive electrode plate 10 formed in a long strip-like shape. This positive electrode tab 12t is an area on which the positive electrode active material layer 14 is not imparted and on which the positive electrode substrate 12 is exposed. In addition, on an area adjacent to an edge side at the positive electrode tab 12t side of this positive electrode plate 10, a protective layer 16 is formed that extends along the longitudinal direction of the positive electrode plate 10.

For each of members configuring the positive electrode plate 10, it is possible to use a conventionally known material capable of being used on a general electric storage device (for example, the lithium ion secondary battery) without particular restriction. For example, for the positive electrode substrate 12, it is possible to preferably use a metal material having a predetermined electrically conductive property. It is preferable that the positive electrode substrate 12 described above is configured with, for example, aluminum, aluminum alloy, or the like. On the other hand, the positive electrode active material layer 14 is a layer containing a positive electrode active material. Below, while the lithium ion secondary battery is referred as an example, a material of the positive electrode active material layer 14 will be explained. However, an explanation described below is not intended to restrict the positive electrode plate of the herein disclosed electrode body.

The positive electrode active material for the lithium ion secondary battery is a material formed in a particle shape and capable of reversibly storing and releasing a lithium ion (the charge carrier). From a perspective of stably manufacturing the high performance positive electrode plate 10, it is suitable that the positive electrode active material is a lithium-transition metal complex oxide. Among the above described lithium-transition metal complex oxide, it is particularly suitable as the transition metal to use a lithium-transition metal complex oxide containing at least one kind of a group consisting of nickel (Ni), cobalt (Co), and manganese (Mn). As a specific example, it is possible to use a lithium nickel cobalt manganese type composite oxide (NCM), a lithium nickel type composite oxide, a lithium cobalt type composite oxide, a lithium manganese type composite oxide, a lithium nickel manganese type composite oxide, a lithium nickel cobalt aluminum type composite oxide (NCA), a lithium iron nickel manganese type composite oxide, or the like. In addition, as a suitable example of the lithium-transition metal complex oxide without containing the Ni, the Co, and the Mn, it is possible to use a lithium iron phosphate type composite oxide (LFP), or the like. Incidentally, the wording "lithium nickel cobalt manganese type composite oxide" in the present specification is a term semantically covering an oxide containing an additive element in addition to the main configuration element (the Li, the Ni, the Co, the Mn, and the O). As an example of the additive element described above, it is possible to use a transition metal element, such as Mg, Ca, Al, Ti, V, Cr, Si, Y, Zr, Nb, Mo, Hf, Ta, W, Na, Fe, Zn, and Sn, a typical metal element, or the like. In addition, the additive element might be a semimetal element, such as B, C, Si, and P, or a non-metallic element, such as S, F, Cl, Br, and I. Although detailed explanation would be omitted, this thing is similar even to the other lithium-transition metal complex oxide that is describes as "... type composite oxide". In addition, the positive electrode active material layer 14 might contain an additive agent other than the positive electrode active material. As an example of the additive agent described above, it is possible to use an electrically conducting material, a binder, or the like. As a specific example of the electrically conducting material, it is possible to use a carbon material, such as acetylene black (AB). As a specific example of the binder, it is possible to use a resin binder, such as polyvinylidene fluoride (PVdF). Incidentally, a content amount of the positive electrode active material, when a whole of a solid content of the positive electrode active material layer 14 is treated as 100 mass%, is approximately equal to or more than 80 mass%, or typically equal to or more than 90 mass%.

On the other hand, the protective layer 16 is a layer configured to have an electrical conduction property being lower than the positive electrode active material layer 14. By providing the above described protective layer 16 on an area adjacent to an edge side of the positive electrode plate 10, it is possible to inhibit an inside short circuit caused by what the positive electrode substrate 12 and the negative electrode active material layer 24 directly come into contact with each other when the separator is broken. For example, as the protective layer 16, it is preferable to form a layer that contains a ceramic particle having an insulating property. As the ceramic particle described above, it is possible to use an inorganic oxide, such as alumina (Al2O₃), magnesia (MgO), silica (SiO₂), and titania (TiO₂), a nitride, such as aluminum nitride, and silicon nitride, a metal hydroxide, such as calcium hydroxide, magnesium hydroxide, and aluminum hydroxide, a clay mineral, such as mica, talc, boehmite, zeolite, apatite, and kaolin, a glass fiber, or the like. In consideration of the insulating property or a heat resistance property, it is suitable among the above described ones to use alumina, boehmite, aluminum hydroxide, silica, or titania. In addition, the protective layer 16 might contain a binder for fixing the ceramic particle on a surface of the positive electrode substrate 12. As the binder described above, it is possible to use a resin binder, such as polyvinylidene fluoride (PVdF). Incidentally, the protective layer is not an essential configuration element of the positive electrode plate. In other words, regarding the herein disclosed electric storage device, it is possible to use a positive electrode plate on which the protective layer is not formed.

### (b) Negative electrode plate

As shown in FIG. 7, the negative electrode plate 20 (the second electrode plate) is a member formed in a long strip-like shape. The negative electrode plate 20 described above includes a negative electrode substrate 22 that is a metal foil formed in a strip-like shape, and includes a negative electrode active material layer 24 that is imparted on a surface of the negative electrode substrate 22. Incidentally, from a perspective of the battery performance, it is preferable that the negative electrode active material layer 24 is imparted on both surfaces of the negative electrode substrate 22. Furthermore, on this negative electrode plate 20, a negative electrode tab 22t is provided that protrudes from one of edge sides in the winding axis direction (the width direction Y) toward the outer side (a right side in FIG. 7). Regarding this negative electrode tab 22t, plural ones are provided at positions with a predetermined interval in the longitudinal direction L of the negative electrode plate 20. This negative electrode tab 22t is an area on which the negative electrode active material layer 24 is not imparted and on which the negative electrode substrate 22 is exposed.

For each of members configuring the negative electrode plate 20, it is possible to use a conventionally known material capable of being used on a general electric storage device (for example, the lithium ion secondary battery) without particular restriction. For example, for the negative electrode substrate 22, it is possible to preferably use the metal material having the predetermined electrically conductive property. It is preferable that the negative electrode substrate 22 described above is configured with, for example, copper, copper alloy, or the like. On the other hand, the negative electrode active material layer 24 is a layer containing a negative electrode active material. Below, as the lithium ion secondary battery is referred as an example, a material of the negative electrode active material layer 24 will be explained. However, an explanation described below is not intended to restrict the negative electrode plate of the herein disclosed electrode body.

For the negative electrode active material, a material is used that can reversibly store and release the charge carrier in relation to the above described positive electrode active material. Incidentally, as a particular material of the negative electrode active material, which is not particularly restricted, it is possible to use a material capable of being used for a conventional and general electric storage device without particular restriction. As the negative electrode active material described above, it is possible to use a carbon material, a silicon type material, or the like. As the carbon material, it is possible to use, for example, a graphite, a hard carbon, a soft carbon, an amorphous carbon, or the like. In addition, it is also possible to use an amorphous carbon covered graphite in which a surface of the graphite is covered with the amorphous carbon, or the like. On the other hand, as the silicon type material, it is possible to use silicon, a silicon oxide (silica), or the like. In addition, the silicon type material might contain the other metal element (for example, alkaline earth metal), or an oxide of that. In addition, the negative electrode active material layer 24 might contain an additive agent other than the negative electrode active material. As an example of the additive agent described above, it is possible to use a binder, a thickening agent, or the like. As a specific example of the binder, it is possible to use a rubber type binder, such as styrene butadiene rubber (SBR). In addition, as a specific example of the thickening agent, it is possible to use carboxymethyl cellulose (CMC), or the like. Incidentally, a content amount of the negative electrode active material, when a whole of a solid content of the negative electrode active material layer 24 is treated as 100 mass%, is approximately equal to or more than 30 mass%, or typically equal to or more than 50 mass%. Incidentally, the negative electrode active material might occupy 80 mass% or more of the negative electrode active material layer 24, or might occupy 90 mass% or more of the negative electrode active material layer.

### (c) Separator

As shown in FIG. 7, the electrode body 40 in accordance with the present embodiment includes 2 separators (the first separator 30A, and the second separator 30B). Each of separators is an insulation sheet on which plural fine penetration holes are formed, while the charge carrier can pass through the plural fine penetration holes. By disposing each of the first separator 30A and the second separator 30B between the positive electrode plate 10 and the negative electrode plate 20, it is possible to inhibit the positive electrode plate 10 and the negative electrode plate 20 from coming into contact with each other and further to move the charge carrier (for example, the lithium ion) between the positive electrode plate 10 and the negative electrode plate 20. Incidentally, as a material of the separator, it is possible to use one capable of being used for a separator of a conventionally known electric storage device without particular restriction. For example, it is preferable that the separator is a porous sheet-shaped member containing a polyolefin resin, or the like. By doing this, it is possible to sufficiently secure a flexibility of the separator, so as to easily perform manufacturing the electrode body 40 (winding and press molding). Incidentally, as the polyolefin resin, it is possible to use polyethylene (PE), polypropylene (PP), or the like, or to use a mixture of them.

In addition, although more details are described later, regarding the herein disclosed technique, the first separator 30A and/or the second separator 30B are held and pulled so as to disassemble the electrode body 40. Thus, as each of the separators, it is preferable to use one having a strength equal to or more than a constant level. From a perspective described above, a thickness of each separator is preferably equal to or more than 5 µm, further preferably equal to or more than 8 µm, furthermore preferably equal to or more than 10 µm, or in particular preferably equal to or more than 12 µm. On the other hand, the thickness of the separator is preferably equal to or less than 30 µm, further preferably equal to or less than 25 µm, furthermore preferably equal to or less than 20 µm, or in particular preferably equal to or less than 18 µm. By doing this, a distance (an inter-electrodes distance) between the positive electrode plate 10 and the negative electrode plate 20 becomes shorter, and thus it is possible to construct the electric storage device 100 outstanding to an electric charge and discharge efficiency.

Next, each of the first separator 30A and the second separator 30B will be described. As shown in FIG. 10, on a surface of the first separator 30A (a surface at a backward Rr side in FIG. 10) opposed to the positive electrode plate 10, a first adhesion layer 34A is imparted. By doing this, the first separator 30A is adhered to the positive electrode plate 10 (the first electrode plate). On the other hand, a surface of the first separator 30A (a surface at a frontward F side in FIG. 10) opposed to the negative electrode plate 20, no adhesion layer is imparted. Thus, the first separator 30A is not adhered to the negative electrode plate 20 (the second electrode plate). Next, on a surface of the second separator 30B (a surface at the backward Rr side in FIG. 10) opposed to the negative electrode plate 20, a second adhesion layer 34B is imparted. By doing this, the second separator 30B is adhered to the negative electrode plate 20 (the second electrode plate). In addition, on a surface of the second separator 30B (the surface at the frontward F side in FIG. 10) opposed to the positive electrode plate 10, no adhesion layer is imparted. Thus, the second separator 30B is not adhered to the positive electrode plate 10 (the first electrode plate).

Incidentally, the first adhesion layer 34A and the second adhesion layer 34B (below, both of which are together referred to as "adhesion layer", too) are layers containing at least a binder resin. As an example of this binder resin, it is preferable to use polyvinylidene fluoride (PVdF), acrylic resin, styrene butadiene rubber (SBR), or the like. By doing this, it is possible to suitably adhere the electrode plate and the separator. In addition, the adhesion layer of the electrode body disclosed herein might contain an inorganic particle. By doing this, it is possible to impart the heat resistance property onto the adhesion layer so as to suppress heat contraction of the separator at a temperature rising time, and thus it is possible to contribute in enhancing a safety property of the electric storage device. Incidentally, as the inorganic particle, it is possible to use a ceramic particle containing a ceramic, such as alumina, silica, titania, boehmite, aluminum hydroxide, magnesium carbonate, magnesia, zirconia, zinc oxide, iron oxide, ceria, and yttria, as a main component. Incidentally, a content amount of the binder resin in the adhesion layer is preferably equal to or more than 10 mass%, further preferably equal to or more than 15 mass%, or in particular preferably equal to or more than 20 mass%. By doing this, it is possible to further suitably adhere the electrode plate and the separator. On the other hand, if the adhesive property of the adhesion layer becomes too strong, there is a possibility that manufacturing the electrode body (winding each of the sheet members) becomes difficult. From a perspective described above, the content amount of the binder resin in the adhesion layer is preferably equal to or less than 40 mass%, further preferably equal to or less than 35 mass%, or in particular preferably equal to or less than 30 mass%. Incidentally, the wording "content amount of the binder resin" means a mass ratio of the binder resin with respect to a total mass of the adhesion layer.

### (d) Wound structure

Below, a particular wound structure of the electrode body 40 in accordance with the present embodiment will be described. At first, as shown in FIG. 9, for manufacturing the electrode body 40, an end part of the first separator 30A, an end part of the positive electrode plate 10, an end part of the second separator 30B, and an end part of the negative electrode plate 20 are aligned so that each sheet member under this state is wound. As this result, at the inside of the electrode body 40, a winding start end part of the first separator 30A (a first starting end part 30As), a winding start end part of the positive electrode plate 10 (a positive electrode starting end part 10s), a winding start end part of the second separator 30B (a second starting end part 30Bs), and a winding start end part of the negative electrode plate 20 (a negative electrode starting end part 20s) are approximately aligned so that each of them under this state is arranged. However, in the herein disclosed technique, a position of the starting end part of each sheet member is not particularly restricted. For example, even if the positions of the starting end parts of respective sheet members are different from each other, an effect induced by the herein disclosed technique (separation of the positive electrode plate 10 and the negative electrode plate 20) can be properly exhibited.

On the other hand, regarding the electrode body 40 in accordance with the present embodiment, positions of winding-end end parts of respective sheet members are different from each other. At first, a length of the negative electrode plate 20 in the present embodiment is set to be longer than the positive electrode plate 10. Thus, as shown at a vicinity of the bent part 40r of the upward U in FIG. 9, the negative electrode plate 20 at an outermost periphery is wound therein to cover a winding-end end part (a positive electrode terminal end part 10e) of the positive electrode plate 10. Then, at a vicinity of a winding-end end part (a negative electrode terminal end part 20e) of the negative electrode plate 20, an area not opposed to the positive electrode plate 10 is formed. By doing this, an area size of the negative electrode plate 20 becomes larger than an area size of the positive electrode plate 10. As this result, a storage capacity of the Li ion on the negative electrode plate 20 becomes relatively larger, and thus it is possible to suppress a precipitation of a metal Li on the negative electrode plate 20.

Next, a length of the first separator 30A and a length of the second separator 30B are set to be longer than the pair of electrode plates (the positive electrode plate 10 and the negative electrode plate 20). Thus, as shown in FIG. 9, the first separator 30A extends from the positive electrode terminal end part 10e so as to be wound therein on the outer peripheral part of the electrode body 40. On the other hand, the second separator 30B extends from the negative electrode terminal end part 20e so as to be wound therein on the outer peripheral part of the electrode body 40. In other words, as shown in FIG. 9 and FIG. 10, on the outer peripheral part of the electrode body 40 (the wound body) in accordance with the present embodiment, a separator wound part 40s is formed in which only the first separator 30A and the second separator 30B are wound therein. By doing this, it is possible to protect the positive electrode plate 10 and the negative electrode plate 20 from an external impact, or the like. Incidentally, a wound number of the first separator 30A and second separator 30B at the separator wound part 40s is not particularly restricted.

Then, regarding the electrode body 40 in accordance with the present embodiment, at the outermost periphery of the wound body, the first separator 30A is wound therein. Here, as shown in FIG. 8, a winding-end end part (a second terminal end part 30Be) of the second separator 30B extends from a winding-end end part (a first terminal end part 30Ae) of the first separator 30A to a downward D so as to be exposed to an outer surface of the wound body (the electrode body 40). Thus, regarding the electrode body 40 in accordance with the present embodiment, both of the first terminal end part 30Ae and the second terminal end part 30Be can be visually recognized from the outside. By doing this, when the electrode body 40 is disassembled, it is possible to easily hold both of the first terminal end part 30Ae of the first separator 30A and the second terminal end part 30Be of the second separator 30B.

Here, as shown in FIG. 10, regarding the present embodiment, neither the first separator 30A nor the second separator 30B on the separator wound part 40s is provided with the adhesion layer (the first adhesion layer 34A, and the second adhesion layer 34B). In other words, the separator wound part 40s in the present embodiment includes a non-adhesion area 30X on which neither the first separator 30A nor the second separator 30B is adhered. Then, this non-adhesion area 30X is formed on a first opposed part F1 between an inner side surface 30Aa of the first separator 30A and an outer side surface 30Bb of the second separator 30B. In addition, the non-adhesion area 30X is formed on a second opposed part F2 between an outer side surface 30Ab of the first separator 30A and an inner side surface 30Ba of the second separator 30B, too. In other words, the first separator 30A in accordance with the present embodiment is provided with the first adhesion layer 34A imparted on an area opposed to the positive electrode plate 10. However, at an area wound therein on the separator wound part 40s (an area from the first terminal end part 30Ae to the positive electrode terminal end part 10e) of this first separator 30A, no adhesion layer is imparted (see FIG. 11). Similarly, the second separator 30B is provided with the second adhesion layer 34B imparted on an area opposed to the negative electrode plate 20. However, at an area wound therein on the separator wound part 40s (an area from the second terminal end part 30Be to the negative electrode terminal end part 20e) of the second separator 30B, no adhesion layer is imparted (see FIG. 11). Regarding the electrode body 40 having the configuration described above, only by holding and pulling the first terminal end part 30Ae and the second terminal end part 30Be, it is possible to easily unwind the separator wound part 40s.

Then, as shown in FIG. 8 to FIG. 10, regarding the present embodiment, a first adhesive tape 80 is attached to the outermost surface of the electrode body 40 (the wound body) so as to straddle both of the first terminal end part 30Ae and the second terminal end part 30Be. By doing this, it is possible to inhibit decomposition of the electrode body 40 during manufacture or during use. Additionally, at an end part in a circumferential direction of the first adhesive tape 80 in the present embodiment, a first peeling part 82 is formed which does not stick to the outermost surface of the wound body (the electrode body 40). By holding this first peeling part 82 so as to pull the first adhesive tape 80, it is possible to suppress breakage of the separator and further to easily peel off the first adhesive tape 80. By doing this, when the first adhesive tape 80 is peeled off, it is possible to inhibit breakage of the first terminal end part 30Ae and the second terminal end part 30Be. As this result, when the winding of the separator wound part 40s is unwound, it is possible to properly hold the first terminal end part 30Ae and the second terminal end part 30Be. Incidentally, it is enough in the present specification for "peeling part of the adhesive tape" not to stick to the outermost surface of the electrode body, and it is possible to apply various configurations for it. For example, the peeling part can be formed by imparting no adhesion agent on the end part of the adhesive tape. Additionally, in a case where the adhesion agent is imparted on a whole area of one surface of the adhesive tape, the end part of this adhesive tape might be folded back on itself to make the adhesion agents be opposed to each other. Even in this case where the above described configuration is applied, it is possible to form the adhesive tape including the peeling part.

In addition, the first peeling part 82 in the present embodiment is provided on an end part (upward U in FIG. 8) closer to the first terminal end part 30Ae among both end parts of the first adhesive tape 80 in a circumferential direction (a height direction Z in FIG. 8). In accordance with such a configuration, it is possible to peel off the first adhesive tape 80 without opposing the winding direction of the separator (from the upward U toward the downward D in FIG. 8). By doing this, it is possible to furthermore suitably suppress the breakage of the first terminal end part 30Ae and the second terminal end part 30Be. Incidentally, the configuration described above is not to restrict the herein disclosed technique. By properly adjusting an adhesive property of the first adhesive tape 80, strength of the separator, or the like, it is possible to sufficiently suppress the breakage of the first terminal end part 30Ae and the second terminal end part 30Be, even if the first peeling part is provided at the end part (downward D in FIG. 8) closer to the second terminal end part 30Be.

### 2. Disassemble of electrode body

When a valuable metal is collected from the electric storage device 100 having the above described configuration, this electric storage device 100 is decomposed and then the electrode body 40 is taken out. Then, the electrode body 40 is disassembled, and then the positive electrode plate 10 and the negative electrode plate 20 are separated. By doing this, it is possible to provide the positive electrode plate 10 and the negative electrode plate 20 individually to the reproduction processing, and thus it is possible to contribute to an efficiency of a valuable metal collection rate, to contribute in reducing the reproduction cost, or the like. Below, a procedure for separating the positive electrode plate 10 and the negative electrode plate 20 from the electric storage device 100 having the above described configuration will be described.

At first, when the electric storage device 100 is disassembled, it is good to electrically discharge the battery and then to cut the battery case 50. By doing this, it is possible to safely decompose the electric storage device 100 (the battery case 50) already having been charged. Then, the electrode body 40 is taken out from the battery case 50 having been decomposed. At that time, as shown in FIG. 5 or the like, the positive electrode tab group 42 of the electrode body 40 is connected to the positive electrode second current collector 72. Therefore, it is good to cut any of the positive electrode tab group 42 and the positive electrode second current collector 72. In addition, the negative electrode tab group 44 is connected to the negative electrode second current collector 77. Therefore, it is good to cut any of the negative electrode tab group 44 and the negative electrode second current collector 77. By doing them, it is possible to easily take out the electrode body 40. Incidentally, a procedure for taking out the electrode body 40 from the battery case 50, which is not particularly restricted, can be suitably changed in accordance with a structure of the electric storage device 100.

Next, in the present embodiment, the electrode body 40 is disassembled, and then the positive electrode plate 10 and the negative electrode plate 20 are separated. In particular, at first, the first adhesive tape 80 is peeled off from the electrode body 40. At that time, by holding and pulling the first peeling part 82, it is possible to easily peel off the first adhesive tape 80 while suppressing the breakage of the first separator 30A and the second separator 30B. Next, the first terminal end part 30Ae of the first separator 30A and the second terminal end part 30Be of the second separator 30B are individually held and pulled. At that time, regarding the separator wound part 40s in the present embodiment, each opposed surface of the first separator 30A and the second separator 30B is not adhered. (In other words, each of the first opposed part F1 and the second opposed part F2 in FIG. 10 is provided with the non-adhesion area 30X.) Thus, only by pulling each of the first terminal end part 30Ae and the second terminal end part 30Be, it is possible to easily unwind the separator wound part 40s.

Then, in the present embodiment, the first separator 30A and the positive electrode plate 10 are adhered to each other, and further the second separator 30B and the negative electrode plate 20 are adhered to each other. However, the first separator 30A and the negative electrode plate 20 are not adhered to each other, and further the second separator 30B and the positive electrode plate 10 are not adhered to each other. Thus, when the winding of the separator wound part 40s is unwound, the electrode body 40 can be, as shown in FIG. 11, separated into the positive electrode plate 10 adhered to the first separator 30A and the negative electrode plate 20 adhered to the second separator 30B.

Then, in the present embodiment, it is preferable that the positive electrode plate 10 and the negative electrode plate 20 after the separation are individually baked. By doing this, the first separator 30A and the second separator 30B are removed. As this result, collection can be implemented in a state where the positive electrode plate 10 and the negative electrode plate 20 are separated. Then, by dissolving the positive electrode plate 10 after the baking into a predetermined dissolution liquid (an acid liquid, or the like), it is possible to prepare a metal solution containing only a metal component derived from the positive electrode plate 10. From this metal solution, it is possible to easily extract the valuable metal (the Li, the Ni, the Co, the Mn, or the like) available for manufacturing the positive electrode plate 10. On the other hand, by dissolving the negative electrode plate 20 after the baking into the dissolution liquid, it is possible to prepare a metal solution containing only a metal component derived from the negative electrode plate 20. From this metal solution, it is possible to easily extract the valuable metal (Cu, or the like) available for manufacturing the negative electrode plate 20. As described above, in accordance with the present embodiment, the pair of electrode plates are individually provided to the reproduction processing, and thus it is possible to contribute to the efficiency of the valuable metal collection rate, to contribute in reducing the reproduction cost, or the like.

### <Another embodiment>

Above, one embodiment of the herein disclosed technique has been explained. Incidentally, the above described first embodiment is an example to which the herein disclosed technique is applied, and is not to restrict the herein disclosed technique. Below, another embodiment of the herein disclosed technique will be described.

### 1. Adhesion of electrode plate and separator

In the first embodiment, the positive electrode plate 10 is used as the electrode plate (the first electrode plate) adhered to the first separator 30A and the negative electrode plate 20 is used as the electrode plate (the second electrode plate) adhered to the second separator 30B. However, a laminating order of the electrode plates is not an element restricting the herein disclosed technique. For example, the negative electrode plate might be adhered to the first separator (in other words, the separator wound therein at the outermost periphery of the wound body). In this case, the positive electrode plate is adhered to the second separator (the separator wound therein at a relatively inner side). It is possible to apply the herein disclosed technique even to the electrode body having the described above configuration.

### 2. Particular adhering means

In addition, regarding the first embodiment, the adhesion layer is imparted on each of the first separator 30A and the second separator 30B. However, a means for adhering the separator and the electrode plate is not particularly restricted. For example, as described above, the positive electrode active material layer 14 and the negative electrode active material layer 24 contain the binders. By unevenly distributing these binders on the surfaces of the positive electrode active material layer 14 and the negative electrode active material layer 24, it is possible to obtain the electrode plate outstanding to the adhesive property of the surface. In addition, between the separator and the electrode plate, an adhesion sheet formed in a strip-like shape might be inserted. By using these means, it is possible to adhere the separator and the electrode plate to each other, even if no adhesion layer is imparted on the surface of the separator.

### 3. Non-adhesion area forming range

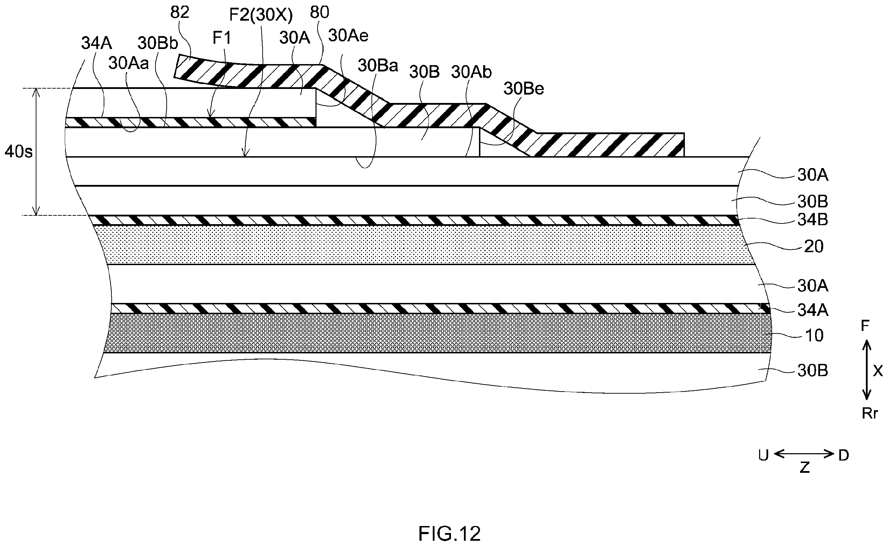

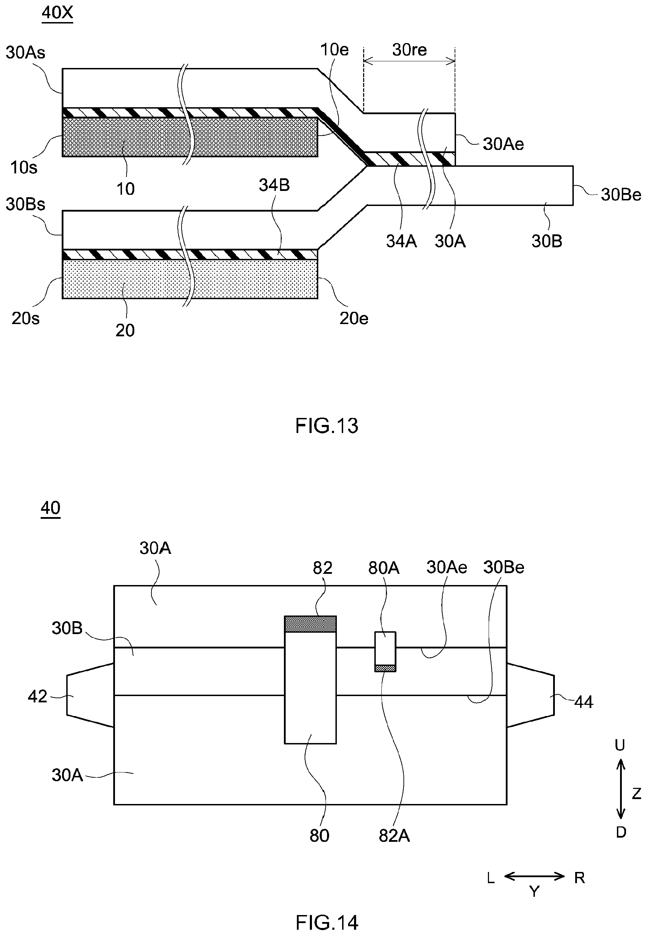

As shown in FIG. 10, regarding the first embodiment, the non-adhesion area 30X is formed on both of the first opposed part F1 and the second opposed part F2. In other words, regarding the first embodiment, at the separator wound part 40s, the first separator 30A and the second separator 30B are not adhered. However, it is enough for the non-adhesion area to be formed on at least one of the first opposed part and the second opposed part, and the non-adhesion area is not restricted to the above described first embodiment. For example, in the embodiment shown by FIG. 12, the first adhesion layer 34A is provided to the first opposed part F1 and no adhesion layer is provided to the second opposed part F2. In other words, FIG. 12 shows the non-adhesion area 30X formed only on the second opposed part F2. Regarding the electrode body 40 having the above described configuration, it is possible, in a state where the first opposed part F1 is still adhered, to unwind the winding of the separator wound part 40s along the second opposed part F2 having the non-adhesion area 30X. In that case, as shown in FIG. 13, after the electrode body 40 is disassembled, a laminate body 40X is formed at one end part (at a right side in FIG. 13) in a longitudinal direction, while the laminate body includes an adhesion residue part 30re to which the first separator 30A and the second separator 30B are adhered via the first adhesion layer 34A. Then, by cutting to remove this adhesion residue part 30re, it is possible to separate the positive electrode plate 10 adhered to the first separator 30A and the negative electrode plate 20 adhered to the second separator 30B. As described above, even in a case where the non-adhesion area is formed on any one of the first opposed part and the second opposed part, it is possible to properly separate the pair of electrode plates.

In addition, the non-adhesion area of the first embodiment is formed on a whole area of the separator wound part in the wound direction. In other words, regarding the first separator 30A of the first embodiment, the first adhesion layer 34A is not imparted on an area from the first terminal end part 30Ae to the positive electrode terminal end part 10e. Similarly, regarding the second separator 30B of the first embodiment, the second adhesion layer 34B is not imparted on an area from the second terminal end part 30Be to the negative electrode terminal end part 20e. However, it is enough for the non-adhesion area in accordance with the herein disclosed technique to extend from the first terminal end part of the first separator and/or a second terminal end part of the second separator toward an inner side in the wound direction. As described above, if the non-adhesion area is formed at the terminal end part of the separator, it is possible to hold the terminal end part when the separator wound part is unwound. In that case, even if an area in which the separators are adhered to each other is present at a inner side in the wound direction more than the terminal end part, it is possible by holding and pulling this terminal end part to peel off the adhesion of these separators. As described above, in a case where the non-adhesion area is formed to extend from the first terminal end part and/or the second terminal end part to the inner side in the wound direction, even if the adhesion of the separators is present on another area, it is possible to properly separate the pair of electrode plates.

Incidentally, it is preferable that the non-adhesion area extends by 10 mm or more (further suitably 15 mm or more, or in particular suitably 20 mm or more) from the first terminal end part of the first separator (or the second terminal end part of the second separator) toward the wound direction. By doing this, it is possible to easily hold the first terminal end part of the first separator (or the second terminal end part of the second separator). In addition, it is further preferable that the non-adhesion area is formed on an area equal to or more than 1% (further suitably equal to or more than 2%, or in particular suitably equal to or more than 3%) of a total length of the first opposed part (or the second opposed part) in the wound direction. By doing this, it is possible to further easily unwind the separator wound part. On the other hand, an upper limit of the length of the non-adhesion area in the wound direction is not particularly restricted. As shown by the first embodiment, in a case where the non-adhesion area is formed on a whole area (100%) of the first opposed part (or the second opposed part) in the wound direction, it is possible to easily unwind the separator wound part in particular.

### 4. Configuration of non-adhesion area

Additionally, in the first embodiment, by providing an area at a part of the separator where the adhesion layer is not imparted, the non-adhesion area is formed. However, it is enough for the non-adhesion area to implement a state where the first separator and the second separator are not adhered, and thus the non-adhesion area is not restricted to the configuration of the first embodiment. For example, in a case where a separator provided with the adhesion layer on the whole area in the length direction is used, it is good to attach a resin sheet having a non adhesive property to an area on which it is planned to form the non-adhesion area. Even in a case where the above described configuration is applied, it is possible to form the non-adhesion area at a predetermined area extending from the terminal end part.

### 5. Adhesive tape

In addition, regarding the first embodiment, the first adhesive tape 80 is attached on the outer periphery surface of the electrode body 40. However, regarding the herein disclosed technique, from a perspective of further easily disassembling the electrode body 40, an adhesive tape other than the above described first adhesive tape 80 might be attached. For example, as shown by FIG. 14, in a case where the non-adhesion area is provided on an area (the first opposed part) containing the first terminal end part 30Ae, it is good to attach the second adhesive tape 80A, which straddles the first terminal end part 30Ae but does not straddle the second terminal end part 30Be, on the outermost surface of the wound body. In that case, if the second adhesive tape 80A is peeled off along the wound direction (from the downward D toward the upward U in FIG. 14), the first terminal end part 30Ae is pulled in accordance with the second adhesive tape 80A being peeled off. By doing this, it is possible to easily unwind the separator wound part along the first opposed part. Incidentally, it is good for the second adhesive tape 80A that, at an end part opposed to the second separator 30B (an end part downward D in FIG. 14) among both end parts in the circumferential direction (the height direction Z in FIG. 14), the second peeling part 82A not sticking to the outermost surface of the wound body is formed. By doing this, it becomes easy to peel off the second adhesive tape 80A along the wound direction (from the downward D toward the upward U in FIG. 14).

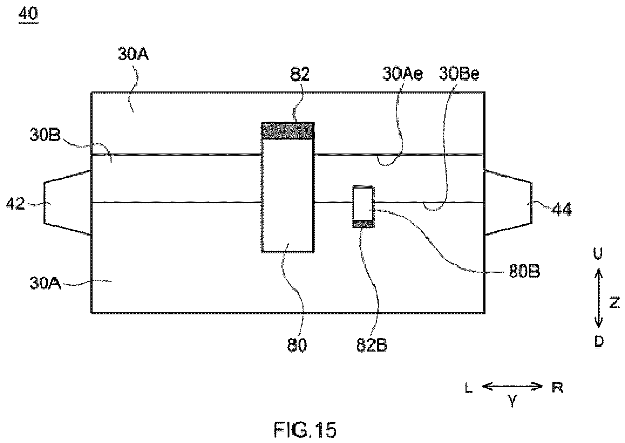

Additionally, as shown by FIG. 15, in a case where the non-adhesion area is provided on an area (the second opposed part) containing the second terminal end part 30Be, it is preferable that a third adhesive tape 80B straddling the second terminal end part 30Be but not straddling the first terminal end part 30Ae is attached to the outermost surface of the wound body. In that case, when the third adhesive tape 80B is peeled off along the wound direction (from the downward D toward the upward U in FIG. 14), the second terminal end part 30Be is pulled in accordance with the third adhesive tape 80B being peeled off. By doing this, it is possible to easily unwind the separator wound part along the second opposed part. Incidentally, it is good for this third adhesive tape 80B that, at the end part opposed to the first separator 30A (the end part downward D in FIG. 14), the third peeling part 82B not sticking to the outermost surface of the wound body is formed. By doing this, it becomes easy to peel off the third adhesive tape 80B from the downward D toward the upward U.

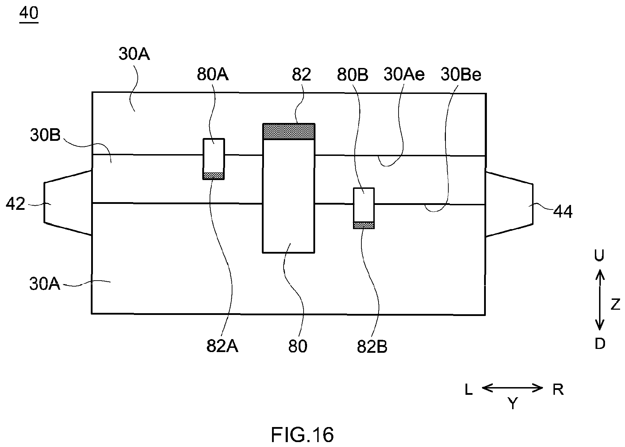

Furthermore, in a case where the area (the first opposed part) containing the first terminal end part 30Ae and the area (the second opposed part) containing the second terminal end part 30Be both are provided with the non-adhesion area, as shown by FIG. 16, it is preferable that both of the second adhesive tape 80A and the third adhesive tape 80B are attached. By doing this, it is possible to easily unwind the separator wound part along each of the first opposed part and the second opposed part, and thus it is possible to further easily separate the positive electrode plate and the negative electrode plate.

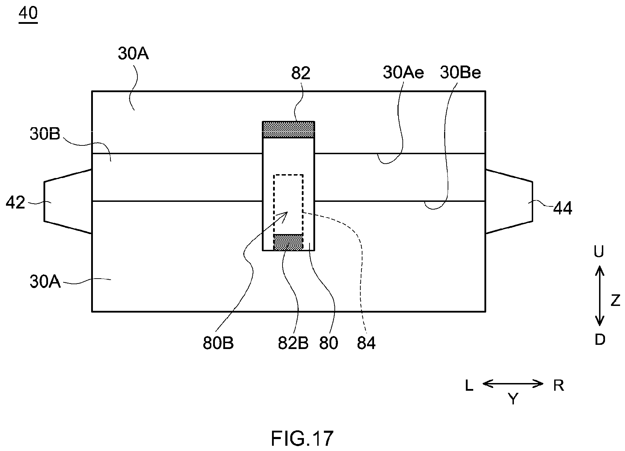

In addition, the second adhesive tape or the third adhesive tape might be integrated with the first adhesive tape. Particularly, regarding an embodiment shown in FIG. 17, the first adhesive tape 80 is attached to straddle both of the first terminal end part 30Ae and the second terminal end part 30Be. Then, at a top end part of this first adhesive tape 80 (an end part at the first terminal end part 30Ae side), the first peeling part 82 is formed. In addition, on this first adhesive tape 80, a perforation 84 is formed that surrounds an area straddling the second terminal end part 30Be but not straddling the first terminal end part 30Ae. In addition, at a lower end part of the area surrounded by this perforation 84 (the end part opposed to the first separator 30A), the third peeling part 82B is formed. When the winding of the electrode body 40 having the above described configuration is unwound, at first, the first peeling part 82 is held so as to pull and peel off the first adhesive tape 80 from the upward U to the downward D. At that time, the first adhesive tape 80 is broken along the perforation 84. As this result, on the surface of the electrode body 40 after the first adhesive tape 80 is peeled off, the third adhesive tape 80B is formed that straddles the second terminal end part 30Be and does not straddle the first terminal end part 30Ae. Then, when the third peeling part 82B is held so as to peel off the third adhesive tape 80B toward the upward U, it is possible to easily unwind the winding of the separator wound part on an area (the second opposed part) containing the second terminal end part 30Be.

Above, the herein disclosed technique has been explained in detail, but these are merely illustrations, and these are not intended to restrict the scope of claims. The technique recited in claims contains matters in which the above-illustrated specific example is variously deformed or changed. In other words, the herein disclosed technique semantically covers embodiments recited in item 1 to item 8 described below.
<Item 1>
   1. An electrode body, comprising:
      a first electrode plate formed in a strip-like shape;
      a first separator formed in a strip-like shape;
      a second electrode plate formed in a strip-like shape; and
      a second separator formed in a strip-like shape,
      the electrode body being a wound body in which, via the first separator and the second separator, the first electrode plate and the second electrode plate are wound therein, wherein
      the first separator is adhered to the first electrode plate but not adhered to the second electrode plate,
      the second separator is adhered to the second electrode plate but not adhered to the first electrode plate,
      at an outer peripheral part of the wound body, a separator wound part in which only the first separator and the second separator are wound therein is formed,
      at an outermost periphery of the separator wound part, the first separator is wound therein,
      a second terminal end part being a winding-end end part of the second separator extends from a first terminal end part being a winding-end end part of the first separator so as to be exposed to an outer surface of the wound body,
      the separator wound part comprises a non-adhesion area where the first separator and the second separator are not adhered, the non-adhesion area is arranged on at least one of a first opposed part and a second opposed part,
      the first opposed part located between an inner side surface of the first separator and an outer side surface of the second separator, the second opposed part located between an outer side surface of the first separator and an inner side surface of the second separator,
      the non-adhesion area extends from the first terminal end part and/or the second terminal end part toward an inner side of a wound direction,
      a first adhesive tape straddling both of the first terminal end part and the second terminal end part is attached to the outermost surface of the wound body, and
      a first peeling part is formed on at least one of both end parts of the first adhesive tape in a circumferential direction, the first peeling part not sticking to the outermost surface of the wound body.
<Item 2> The electrode body recited in item 1, wherein
   the first peeling part is formed at the end part closer to the first terminal end part.
<Item 3> The electrode body recited in item 1 or 2, wherein
   the non-adhesion area is provided on an area containing the first terminal end part, and
   a second adhesive tape straddling the first terminal end part but not straddling the second terminal end part is attached to the outermost surface of the wound body.
<Item 4> The electrode body recited in item 3, wherein
   a second peeling part not sticking to the outermost surface of the wound body is formed on an end part opposed to the second separator among both end parts in a circumferential direction of the second adhesive tape.
<Item 5> The electrode body recited in any one of items 1 to 4, wherein
   an area containing the second terminal end part is provided with the non-adhesion area, and
   a third adhesive tape straddling the second terminal end part but not straddling the first terminal end part is attached to the outermost surface of the wound body.
<Item 6> The electrode body recited in item 5, wherein
   a third peeling part not sticking to the outermost surface of the wound body is formed on an end part opposed to the first separator among both end parts in a circumferential direction of the third adhesive tape.
<Item 7> The electrode body recited in any one of items 1 to 6, wherein
   the non-adhesion area is formed on both of the first opposed part and the second opposed part over a whole area of the separator wound part.
<Item 8> An electric storage device, comprising:
   an electrode body; and
   a battery case configured to accommodate the electrode body, wherein
   the electrode body is the electrode body recited in any one of items 1 to 7.

## Claims

1. An electrode body (40), comprising:
a first electrode plate (10) formed in a strip-like shape;
a first separator (30A) formed in a strip-like shape;
a second electrode plate (20) formed in a strip-like shape; and
a second separator (30B) formed in a strip-like shape,
the electrode body (40) being a wound body in which, via the first separator (30A) and the second separator (30B), the first electrode plate (10) and the second electrode plate (20) are wound therein, wherein
the first separator (30A) is adhered to the first electrode plate (10) but not adhered to the second electrode plate (20),
the second separator (30B) is adhered to the second electrode plate (20) but not adhered to the first electrode plate (10),
at an outer peripheral part of the wound body, a separator wound part (40s) in which only the first separator (30A) and the second separator (30B) are wound therein is formed,
at an outermost periphery of the separator wound part (40s), the first separator (30A) is wound therein,
a second terminal end part (30Be) being a winding-end end part of the second separator (30B) extends from a first terminal end part (30Ae) being a winding-end end part of the first separator (30A) so as to be exposed to an outer surface of the wound body,
the separator wound part (40s) comprises a non-adhesion area (30X) where the first separator (30A) and the second separator (30B) are not adhered, the non-adhesion area (30X) is arranged on at least one of a first opposed part (F 1) and a first opposed part (F2),
the first opposed part (F 1) located between an inner side surface of the first separator (30A) and an outer side surface of the second separator (30B), the first opposed part (F2) located between an outer side surface of the first separator (30A) and an inner side surface of the second separator (30B),
the non-adhesion area (30X) extends from the first terminal end part (30Ae) and/or the second terminal end part (30Be) toward an inner side of a wound direction,
a first adhesive tape (80) straddling both of the first terminal end part (30Ae) and the second terminal end part (30Be) is attached to the outermost surface of the wound body, and
a first peeling part (82) is formed on at least one of both end parts of the first adhesive tape (80) in a circumferential direction, the first peeling part (82) not sticking to the outermost surface of the wound body.

2. The electrode body (40) according to claim 1, wherein
the first peeling part (82) is formed at the end part closer to the first terminal end part (30Ae).

3. The electrode body (40) according to claim 1 or 2, wherein
the non-adhesion area (30X) is provided on an area containing the first terminal end part (30Ae), and
a second adhesive tape (80A) straddling the first terminal end part (30Ae) but not straddling the second terminal end part (30Be) is attached to the outermost surface of the wound body.

4. The electrode body (40) according to claim 3, wherein
a second peeling part (82A) not sticking to the outermost surface of the wound body is formed on an end part opposed to the second separator (30B) among both end parts in a circumferential direction of the second adhesive tape (80A).

5. The electrode body (40) according to any one of claims 1 to 4, wherein
an area containing the second terminal end part (30Be) is provided with the non-adhesion area (30X), and
a third adhesive tape (80B) straddling the second terminal end part (30Be) but not straddling the first terminal end part (30Ae) is attached to the outermost surface of the wound body.

6. The electrode body (40) according to claim 5, wherein
a third peeling part (82B) not sticking to the outermost surface of the wound body is formed on an end part opposed to the first separator (30A) among both end parts in a circumferential direction of the third adhesive tape (80B).

7. The electrode body (40) according to any one of claims 1 to 6, wherein
the non-adhesion area (30X) is formed on both of the first opposed part (F1) and the first opposed part (F2) over a whole area of the separator wound part (40s).

8. An electric storage device (100), comprising:
an electrode body (40); and
a battery case (50) configured to accommodate the electrode body (40), wherein
the electrode body (40) is the electrode body according to any one of claims 1 to 7.
